# EUROPÄISCHE PATENTSCHRIFT

(11) **EP 1 867 494 B1**
(45) Veröffentlichungstag und Bekanntmachung des Hinweises auf die Patenterteilung: **18.02.2009**
(21) Anmeldenummer: 07107070.0
(22) Anmeldetag: 27.04.2007
(51) Int. Cl.: B60C 1/00, B60C 17/04, B60C 17/06, C08L 7/00, C08L 9/00, C08L 21/00

(54) **Fahrzeugluftreifen mit Seitenwand-Verstärkungsprofil**
Vehicle pneumatic tyre with side wall reinforcement profile
Pneus de véhicule à profilé de renfort latéral

(30) Priorität: 16.06.2006 DE 102006027867
(43) Veröffentlichungstag der Anmeldung: 19.12.2007
(73) Patentinhaber: Continental Aktiengesellschaft, 30165 Hannover (DE)
(72) Erfinder: Recker, Dr. Carla, 30167, Hannover (DE); Katrakova, Dr. Danka, 30419, Hannover (DE)

(56) Entgegenhaltungen:
- EP-A- 1 279 687
- EP-A- 1 514 899
- EP-A2- 0 386 905
- US-A- 4 424 306
- US-A- 4 824 908
- US-A1- 2004 031 550

## Beschreibung

Die Erfindung betrifft Fahrzeugluftreifen in radialer Bauart mit einem profilierten Laufstreifen, einem mehrlagigen Gürtelverband, einer Innenschicht, einer zumindest einlagig ausgeführten Karkasse, welche um Wulstkerne und Wulstprofile in Wulstbereichen geführt ist, Seitenwänden und mit zumindest je einem im Bereich jeder Seitenwand eingebrachten, im Querschnitt mondsichelförmigen Verstärkungsprofil, welches sich jeweils zumindest über einen Großteil der Seitenwandlänge erstreckt und aus zumindest einer vulkanisierten Kautschukmischung gebildet ist.

Derartige im Pannenfall selbsttragende Fahrzeugluftreifen sind in unterschiedlichen Ausführungen schon seit längerem bekannt. Die im Bereich der Seitenwände des Reifens eingebauten Verstärkungsprofile werden bezüglich ihrer Querschnittsform und bezüglich diverser Eigenschaften ihrer elastomeren Mischung derart ausgeführt, dass sie in der Lage sind, den Reifen bei einem plötzlichen Druckverlust, also im Pannenfall, auf eine gewisse Zeit bzw. über eine gewisse Laufleistung selbsttragend zu erhalten, so dass eine Weiterfahrt möglich ist. Ein selbsttragender Reifen der eingangs genannten Art ist beispielsweise aus der DE 29 43 654 A1 bekannt. Der Reifen ist im Bereich seiner Seitenwände jeweils mit einem ein- oder mehrteiligen, etwa mondsichelförmigen Verstärkungsprofil versehen, welches zwischen der Innenschicht und der Karkasslage angeordnet ist und bis unterhalb des Gürtels und bis in die Nähe der Wulstbereiche verläuft.

Das Seitenwand-Verstärkungsprofil, auch SSR-Insert (self supporting runflat-insert) genannt, eines im Pannenfall selbsttragenden Reifens ist in der Regel aus einer harten Mischung gebildet, damit der Reifen auch ohne Luft über eine bestimmte Distanz gefahren werden kann und nicht vollständig einfällt, wodurch er auf der Felge läuft und dadurch völlig zerstört wird. Gleichzeitig darf sich die Mischung des Seitenwand-Verstärkungsprofils im Pannenlauf nicht zu stark erwärmen, damit es nicht durch Reversion der Mischung des Verstärkungsprofils zu einer Zerstörung des Verstärkungsprofils kommt. Im Normallauf soll der Reifen mit dem Seitenwand-Verstärkungsprofil sich jedoch möglichst wenig hinsichtlich seiner Fahreigenschaften und seinem Gewicht von einem üblichen Reifen unterscheiden.

Es ist bekannt, dass man harte Mischungen, die als Seitenwand-Verstärkungsprofil eingesetzt werden können, durch Erhöhung der Menge an Ruß als Füllstoff oder durch einen hohen Vernetzungsgrad der Mischung mit Hilfe von großen Mengen an Vemetzungsreagenzien und Beschleunigern herstellen kann. Die Erhöhung der Rußmenge geht allerdings mit schlechtem Verarbeitungsverhalten und starker Erwärmung bei dynamischer Beanspruchung einher, während die Erhöhung des Vernetzungsgrades durch herkömmliche Vernetzung mit Schwefel die Stabilität bei hohen Temperaturen stark beeinträchtigt.

In der EP 1 577 339 A1 werden Kautschukmischungen für das Seitenwand-Verstärkungsprofil von im Pannenfall selbsttragenden Reifen vorgeschlagen, die 10 bis 100 Gewichtsteile Ruß und zumindest 2 Gewichtsteile Vemetzungsagens, bezogen auf 100 Gewichtsteile Kautschuk enthalten, wobei der Kautschuk 10 bis 50 Gew.-% eines speziellen sternförmigen, lösungspolymerisierten Polybutadiens aufweist. In den Beispielen werden Naturkautschuk und Polybutadien im Verschnitt eingesetzt und es wird mit einem herkömmlichen Schwefel-Beschleuniger-System vernetzt.

Ausgehend von diesem Stand der Technik liegt der Erfindung die Aufgabe zugrunde, im Pannenfall selbsttragende Fahrzeugluftreifen bereitzustellen, die sich durch ein verbessertes Pannenlaufverhalten auszeichnen, d. h. die über eine längere Strecke und/oder mit höherer Geschwindigkeit im Pannenfall gefahren werden können.

Gelöst wird diese Aufgabe erfindungsgemäß dadurch, dass die Kautschukmischung des im Querschnitt mondsichelförmigen Verstärkungsprofils mit Hilfe zumindest eines bifunktionellen Vernetzers unter Bildung von Urethan- oder Harnstoffbrücken vulkanisiert ist.

Es hat sich überraschenderweise herausgestellt, dass sich mit der Vernetzung über Urethan- oder Harnstoffbrücken Vulkanisate herstellen lassen, die sich durch eine besonders hohe dynamische Haltbarkeit bei hohen Temperaturen (T > 120 °C) bei gleichzeitig hoher Steifigkeit und geringer Reversionsneigung herstellen lassen. Thermische und dynamische Haltbarkeit werden durch die speziellen Ausbildung von Urethan- bzw. Harnstoffnetzknoten vereint und die Hitze- und Alterungsbeständigkeit werden verbessert. Ein Reifen mit einem mondsichelförmigen Verstärkungsprofil aus einer derartigen Mischung zeigt daher verbesserte Pannenlaufleistung.

Das mondsichelförmige Verstärkungsprofil kann bei Verwendung der vorgenannten Mischung konstruktiv weniger hart, z. B. dünner, ausgelegt werden, ohne dass Pannenlauffähigkeit beeinträchtigt wird, dadurch kann gleichzeitig das Komfortverhalten des Reifens verbessert werden.

Die Urethan- oder Harnstoffbrücken können zum einen dadurch erzielt werden, dass die Mischung Polymere enthält, die OH-Gruppen (führen zu Urethanbrücken) und/oder NH-Gruppen (führen zu Hamstoffbrücken) aufweisen, die jeweils mit Di- oder Polyisocyanaten als bifunktionellem Vernetzer vernetzt werden. Die Vernetzung der OH-Gruppen führt dabei zu Urethanbrücken und die Vernetzung der NH-Gruppen führt zu Hamstoffbrücken. Als Di- oder Polyisocyanate können z. B. solche auf der Basis von Toluylen-diisocyanat (TDI), Hexemethylen-diisocyanat (HDI) oder Methylendiphenylendiisocyanat (MDI) eingesetzt werden, die aus der Polyurethanchemie bekannt sind.

Als bifunktionelle Vernetzer können aber auch alle Vernetzer eingesetzt werden, die in Kautschukmischungen mit Dienkautschuken zur Bildung von Urethan- oder Harnstoffbrücken führen. Bevorzugt wird als bifunktioneller Vernetzer ein Nitrosophenol/Diisocyanat-Addukt eingesetzt. Diese Addukte dissoziieren bei Wärmezufuhr in p-Benzoquinonmonooxim und das Diisocyanat. Das p-Benzoquinonmonooxim tautomerisiert zu p-Nitrosophenol, welches mit dem Polymer zu gebundenen Aminophenolgruppen reagiert. Letztere gehen mit dem Diisocyanat eine Vernetzungsreaktion unter Bildung von Urethanbindungen ein.

Im Hinblick auf eine besonders gute Verbesserung des Pannenlaufs bei Reifen wird als Nitrosophenol/Diisocyanat-Addukt bevorzugt ein Addukt aus Nitrosophenol und Methylen-bis-(4-phenylisocyanat) eingesetzt. Diese Addukt ist z. B. unter dem Namen NOVOR^{®} 950 von der Firma Akrochem Corporation, USA, erhältlich. Dieses Addukt kann als einziger Vernetzer oder in Kombination mit anderen bifunktionellen Vemetzem eingesetzt werden.

Gemäß einer bevorzugten Weiterbildung der Erfindung wird die Kautschukmischung des im Querschnitt mondsichelförmigen Verstärkungsprofils mit Hilfe von 2 bis 12 phr, vorzugsweise 3 bis 9 phr, des bifunktionellen Vernetzers vulkanisiert. Man erhält auf diese Weise ein Netzwerk, das ein Optimum an dynamischer Haltbarkeit bei hohen Temperaturen und eine hohe Steifigkeit gewährleistet.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Um die Eigenschaften des im Querschnitt mondsichelförmigen Verstärkungsprofils weiter zu bessern und preiswerter zu gestalten, hat es sich als sinnvoll erwiesen, wenn die Kautschukmischung des Verstärkungsprofils zusätzlich und gleichzeitig mit Schwefel und zumindest einem Vulkanisationsbeschleuniger für die Schwefelvulkanisation vulkanisiert ist. Der Schwefel wird dabei bevorzugt in Mengen von 0,2 bis 6 phr eingesetzt. Die Mischungen lassen sich auf diese Weise in einem kürzeren Zeitfenster vulkanisieren.

Als Vulkanisationsbeschleuniger können alle dem Fachmann für die Schwefelvulkanisation bekannten Beschleuniger, insbesondere Sulfenamidbeschleuniger wie Benzothiazyl-2-cyclohexyl-sulfenamid (CBS), eingesetzt werden. Es können auch mehrere Vulkanisationsbeschleuniger gleichzeitig verwendet werden. Um die Temperaturstabilität der Vulkanisate weiter zu erhöhen und die Scorchsicherheit (Sicherheit vor frühzeitigem Anvulkanisieren) zu verbessern, wird vorzugsweise Zink-dibenzyldithiocarbamat (ZBEC) eingesetzt.

Es hat sich herausgestellt, dass mit Zink-dibenzyldithiocarbamat als Beschleuniger bei der Schwefelvulkanisation besonders viele thermisch stabile S₁-Netzknoten erzielt werden und ein ausgewogenes Maß an thermisch stabilen Netzknoten in Kombination mit thermisch und dynamisch stabilen Urethan- oder Harnstoffbrücken eine besonders hohe Pannenlaufleistung gewährleistet. Besonders vorteilhaft für die Festigkeit des Verstärkungsprofils ist scheinbar, dass lange Polymerverknüpfungsketten neben sehr kurzen Ketten vorliegen und keine statische Verteilung über die Länge der Polymerverknüpfungsketten, wie sie bei herkömmlicher Schwefelvulkanisation gebildet wird, vorhanden ist.

Die Kautschukmischung für das im Querschnitt mondsichelförmige Verstärkungsprofil des Fahrzeugluftreifens enthält als Kautschuk vorzugsweise Naturkautschuk (NR) und/oder Polybutadien (BR). Enthält die Kautschukmischung als Dienkautschuk Polybutadien (BR), kann es sich dabei sowohl um cis-1,4- als auch um 1,2-Polybutadien (sowohl in syndiotaktischer als auch in ataktischer Form) handeln.

Die Kautschukmischung für das im Querschnitt mondsichelförmige Verstärkungsprofil kann aber auch noch weitere Kautschuke, insbesondere Dienkautschuke, wie z. B. synthetisches Polyisopren (IR), Acrylnitril-Butadien-Kautschuk (NBR), Chlorprenkautschuk (CR), Styrol-Isopren-Butadien-Terpolymer (SIBR), Isopren-Butadien-Kautschuk, Styrol-Isopren-Kautschuk oder Styrol-Butadien-Copolymer (SBR), enthalten.

Um die Erwärmung des im Querschnitt mondsichelförmigen Verstärkungsprofils im Pannenfall weiter zu verringern, enthält die Mischung für das Verstärkungsprofil 40 bis 90 phr, vorzugsweise 50 bis 70 phr, hysteresearmen Ruß mit einer Jodadsorptionszahl von weniger als 100 g/kg. Es können z. B. Ruße des Typs N339, N660, N550 oder Gemische aus diesen Rußen eingesetzt werden.

Die Kautschukmischung für das im Querschnitt mondsichelförmige Verstärkungsprofil kann weitere in der Kautschukindustrie übliche Zuschlagstoffe, wie beispielsweise weitere Füllstoffe (z. B. Kieselsäure, Aluminiumoxide, Alumosilicate, Aluminiumhydroxid, Schichtsilikate, Kreide, Stärke, Magnesiumoxid, Titandioxid und/oder Kautschukgele), Kupplungsagenzien zur Anbindung der Füllstoffe an den Kautschuk, Weichmacher, Alterungsschutzmittel, Aktivatoren, Wachse, Harze und Mastikationshilfsmittel, enthalten. Die Zuschlagstoffe werden in üblichen Mengen eingesetzt.

Für die Herstellung des erfindungsgemäßen Fahrzeugluftreifens wird die Kautschukmischung für das im Querschnitt mondsichelförmige Verstärkungsprofil extrudiert und im Reifenrohlingsbau in üblicher Weise aufgelegt. Der Rohling wird im Anschluss vulkanisiert.

Als besonders vorteilhaft für die Pannenlaufeigenschaften hat es sich ferner erwiesen, wenn neben dem im Querschnitt mondsichelförmigen Verstärkungsprofil auch die Wulstprofile (Kernprofile, Apex) auf einer Kautschukmischung basieren, die mit Hilfe zumindest eines bifunktionellen Vernetzers unter Bildung von Urethan- oder Harnstoffbrücken vulkanisiert sind. Mondsichelförmiges Verstärkungsprofil und Wulstprofil basieren vorzugsweise auf derselben Kautschukmischung. Auch die Wulstprofile werden im Pannenfall extremen thermischen Belastungen ausgesetzt und müssen dynamisch steif sein. Zusätzlich bietet die Verwendung von identischen Mischungen für verschiedene Reifenbauteile Verarbeitungs-, Lagerungs- und Kostenvorteile.

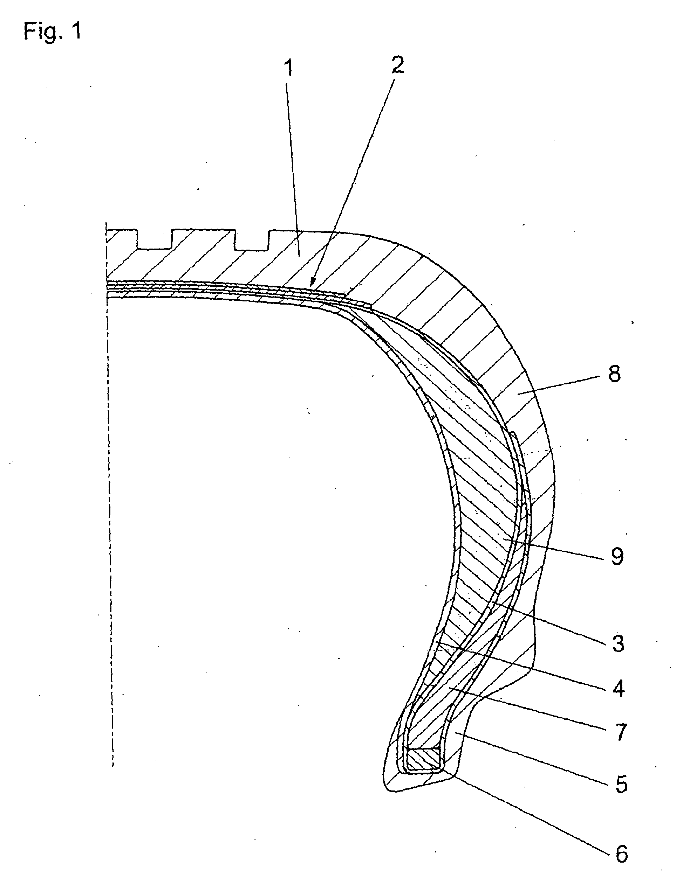

Anhand von Vergleichs- und Ausführungsbeispielen, die in der einzigen Zeichnungsfigur Fig. 1 und in den Tabellen 1 bis 4 dargestellt sind, soll die Erfindung näher erläutert werden. Dabei zeigt Fig. 1 einen Teilquerschnitt durch einen Fahrzeugluftreifens radialer Bauart für Personenkraftwagen.

Gemäß des in Fig. 1 gezeigten Querschnitts sind beispielhaft die wesentlichen Bestandteile, aus welchen sich der dargestellte Fahrzeugluftreifen zusammensetzt, ein profilierter Laufstreifen 1, ein bei der gezeigten Ausführung aus zwei Lagen bestehender Gürtel 2, eine einlagig ausgeführte Karkasse 3, eine weitgehend luftdicht ausgeführte Innenschicht 4, Wülste 5 mit Wulstkernen 6 und Wulstkernprofilen (Kernprofilen, Apex) 7, sowie Seitenwände 8 und etwa mondsichelförmige Verstärkungsprofile 9. Die beiden Lagen des Gürtels 2 bestehen aus in eine Gummimischung eingebetteten Festigkeitsträgern aus Stahlcord, welche innerhalb jeder Lage parallel zueinander verlaufen, wobei die Stahlcorde der einen Lage in kreuzender Anordnung zu den Stahlcorden der zweiten Lage orientiert sind und mit der Reifenumfangsrichtung jeweils einen Winkel zwischen 15° und 30° einschließen. Auch die Karkasse 3 kann in herkömmlicher und bekannter Weise ausgeführt sein und somit in eine Gummimischung eingebettete, in radialer Richtung verlaufende Verstärkungsfäden aus einem textilen Material oder aus Stahlcord aufweisen. Die Karkasse 3 ist um die Wulstkerne 6 von innen nach außen geführt, ihre Hochschläge verlaufen neben den Wulstkernprofilen 7 in Richtung Gürtel 2.

Die aus der vulkanisierten Kautschukmischung hergestellten Verstärkungsprofile 9 sind während des Aufbaus des Reifens auf der Innenschicht 4 positioniert worden und befinden sich daher zwischen dieser und der Karkasse 3. Die Dicke der Verstärkungsprofile 9 nimmt sowohl Richtung Gürtel 2 als auch Richtung Wulst 5 ab. Richtung Gürtel 2 reicht jedes Verstärkungsprofil 9 bis unter die Randbereiche desselben. Richtung Wulst 5 endet jedes Verstärkungsprofil 9 knapp oberhalb des Wulstkernes 6. Über den überwiegenden Bereich der Länge der Seitenwand ist jedes Verstärkungsprofil 9 nahezu konstant dick ausgeführt, seine Stärke am Punkt der maximalen Dicke ist von der Reifengröße und der Reifenart abhängig und kann 5 bis 12 mm betragen.

In einem Fahrzeugluftreifen können erfindungsgemäß ausgeführte Verstärkungsprofile mit weiteren Verstärkungsprofilen kombiniert werden. Möglich ist auch eine andere Anordnung der Verstärkungsprofile als jene in Fig. 1 gezeigte, beispielsweise nicht zwischen Innenschicht 4 und Karkasse 3, sondern zwischen Karkasse 3 und Seitenwand 8.

In der folgenden Tabelle 1 sind Vergleichs- und erfindungsgemäße Kautschukmischungen dargestellt, die für das im Querschnitt mondsichelförmige Verstärkungsprofil und ggf. das Wulstprofil eingesetzt werden können. Bei sämtlichen in der Tabelle 1 enthaltenen Mischungsbeispielen sind die angegebenen Mengenangaben Gewichtsteile, die auf 100 Gewichtsteile Gesamtkautschuk bezogen sind (phr). Die Vergleichsmischungen sind mit V gekennzeichnet, die erfindungsgemäßen Mischungen sind mit E gekennzeichnet. In der Tabelle 1 wurden die Mengen von Vernetzer, Vulkanisationsbeschleuniger, Schwefel und Aktivatoren (Zinkoxid und Stearinsäure) variiert. Die übrigen Mischungsbestandteile blieben unverändert.

**Tabelle 1**

| **Bestandteile** | **Einheit** | **1(V)** | **2(E)** | **3(E)** | **4(E)** | **5(E)** | **6(E)** |
|---|---|---|---|---|---|---|---|
| Naturkautschuk | phr | 30 | 30 | 30 | 30 | 30 | 30 |
| BR^{a} | phr | 70 | 70 | 70 | 70 | 70 | 70 |
| RußN660 | phr | 60 | 60 | 60 | 60 | 60 | 60 |
| Weichmacheröl | phr | 10 | 10 | 10 | 10 | 10 | 10 |
| Alterungsschutzmittel | phr | 3 | 3 | 3 | 3 | 3 | 3 |
| Zinkoxid | phr | 5 | - | - | 2 | 2 | 2 |
| Stearinsäure | phr | 1 | 1 | 1 | 0,3 | 0,3 | 0,3 |
| TBzTD^{b} | phr | 0,8 | - | - | 0,2 | 0,2 | 0,2 |
| ZBEC | phr | - | 2 | 2 | 1,4 | 0,9 | 0,9 |
| CBS | phr | 2,3 | - | - | 0,7 | 0,4 | 0,4 |
| Schwefel 66,7 % in naphthenischem Öl | phr | 9 | - | - | 2,7 | 1,8 | 1,8 |
| bifunktioneller Vernetzer^{c} | phr | - | 6,7 | 6,7 | 4,7 | 3,1 | 3,1 |

| | | | | | | | |
|---|---|---|---|---|---|---|---|
| ^{a} High-cis Polybutadien vom Nd-Typ ^{b} Tetrabenzylthiuramdisulfid ^{c} Addukt aus Nitrosophenol und Methylen-bis-(4-phenylisocyanat), NOVOR^{®} 950, Akrochem Corporation, USA | | | | | | | |

Die Mischungsherstellung erfolgte unter üblichen Bedingungen in zwei Stufen in einem Labortangentialmischer. Es wurden die Umsatzzeiten bis zum Erreichen der relativen Vernetzungsgrade von 10 und 95 % (t₁₀, t₉₅) sowie die Reversionzeiten bis zu 99 % Reversion (t_{R99}) über ein rotorloses Vulkameter (MDR = Moving Disc Rheometer) gemäß DIN 53 529 bei 160 ermittelt. Aus sämtlichen Mischungen wurden Prüfkörper durch Vulkanisation bei 160 °C über 20 min und bei 180 °C über 10 min hergestellt und mit diesen Prüfkörpern für die Kautschukindustrie typische Materialeigenschaften bestimmt, die in der Tabelle 2 aufgelistet sind. Für die Tests an Prüfkörpern wurden folgende Testverfahren angewandt:
- Shore-A-Härte bei Raumtemperatur und 70 °C gemäß DIN 53 505
- Rückprallelastizität bei Raumtemperatur und 70 °C gemäß DIN 53 512
- Zugfestigkeit bei Raumtemperatur und 70 °C gemäß DIN 53 504
- Reißdehnung bei Raumtemperatur gemäß DIN 53 504
- Spannungswerte bei 50 und 100% statischer Dehnung bei Raumtemperatur gemäß DIN 53 504
- Bruchenergiedichte bestimmt im Zugversuch nach DIN 53 504, wobei die Bruchenergiedichte die bis zum Bruch erforderliche Arbeit, bezogen auf das Volumen der Probe, ist
- mittlerer dynamischer Speichermodul E' zwischen 50 und 70 °C sowie zwischen 100 und 250 °C gemäß DIN 53 513 aus Messung mit Variation der Temperatur bei dynamischer Verformungsamplitude von 1 % bei 6 % Vorverformung und 10 Hz

**Tabelle 2**

| **Eigenschaft** | **Einheit** | **1(V)** | **2(E)** | **3(E)** | **4(E)** | **5(E)** | **6(E)** |
|---|---|---|---|---|---|---|---|
| t₁₀ bei 160°C | min | 1,5 | 1,8 | 1,9 | 0,5 | 0,7 | 0,8 |
| t₉₅bei 160°C | min | 2,8 | 39,8 | 41,7 | 6,6 | 8,1 | 13,3 |
| t_{R99} bei 160 °C | min | 5,1 | - | - | 66,6 | 68,7 | - |
| **20 min, 160 °C** | | | | | | | |
| Härte bei RT | Shore A | 70,7 | 60,2 | 59,8 | 71,8 | 67,0 | 67,9 |
| Härte bei 70 °C | Shore A | 72,0 | 59,1 | 58,9 | 72,0 | 66,9 | 67,7 |
| Rüpra. bei RT | % | 74,8 | 63,0 | 63,0 | 73,4 | 71,3 | 71,8 |
| Rüpra. bei 70 °C | % | 77,4 | 58,6 | 58,0 | 74,8 | 73,5 | 71,8 |
| Zugfestigkeit bei RT | MPa | 7,3 | 10,6 | 11,7 | 8,0 | 7,5 | 9,7 |
| Reißdehnung bei RT | % | 136 | 311 | 336 | 156 | 188 | 222 |
| Spannungswert 50 % | MPa | 2,42 | 1,32 | 1,33 | 2,41 | 1,84 | 1,92 |
| Spannungswert 100 % | MPa | 5,42 | 2,46 | 2,52 | 5,09 | 3,62 | 3,85 |
| E' mean (50-70 °C) | MPa | 9,28 | 7,5 | 7,93 | 9,97 | 8,54 | 8,9 |
| E' mean (100-250 °C) | MPa | 9,46 | 7,23 | 7,6 | 10,35 | 8,71 | 9,17 |
| E'(250°C)-E'(150°C) | MPa | -1,95 | -0,42 | -0,24 | -1,9 | -1,51 | -1,34 |
| **10 min, 180 °C** | | | | | | | |
| Härte bei RT | Shore A | 65,8 | 61,2 | 61,5 | 69,4 | 65,2 | 66,4 |
| Härte bei 70 °C | Shore A | 66,4 | 60,4 | 60,4 | 69,6 | 65,0 | 66,5 |
| Rüpra. bei RT | % | 70,1 | 65,3 | 64,3 | 72,6 | 69,6 | 69,7 |
| Rüpra. bei 70 °C | % | 74,3 | 62,0 | 60,0 | 72,9 | 70,7 | 71,6 |
| Zugfestigkeit bei RT | MPa | 8,5 | 8,4 | 11,2 | 7,4 | 9,1 | 9,8 |
| Reißdehnung bei RT | % | 205 | 242 | 300 | 163 | 237 | 242 |
| Spannungswert 50 % | MPa | 1,77 | 1,38 | 1,40 | 2,14 | 1,67 | 1,76 |
| Spannungswert 100 % | MPa | 3,67 | 2,66 | 2,75 | 4,39 | 3,23 | 3,45 |

Aus der Tabelle 2 wird ersichtlich, dass die erfindungsgemäßen Mischungen keine Reversion oder nur eine ganz geringe Reversion zeigen. Bei den Mischungen 2(E), 3(E) und 6(E) konnte keine Reversion festgestellt werden. Die Vulkanisate aus den Mischungen 2(E) und 3(E) zeigen im Vergleich zu den Vulkanisaten der 1(V) eine geringere Härte und eine geringere Rückprallelastizität bei 70 °C Diese beiden Eigenschaften bewirken beim Einsatz als Verstärkungsprofil in Notlaufreifen ein gutes Komfortverhalten im Normalbetrieb. Gleichzeitig zeichnen sich die Vulkanisate der Mischungen 2(E) und 3(E) durch sehr gute Reißeigenschaften, d. h. hohe Zugfestigkeiten und Reißdehnungen, aus. Besonders bemerkenswert bei den Vulkanisaten aus den erfindungsgemäßen Mischungen ist jedoch, dass sie mit zunehmender Temperatur, entgegen dem üblichen Verhalten wie es beispielsweise die Vulkanisate der Mischungen 1 zeigen, nur eine verringerte Steifigkeitsabnahme aufweisen; die Differenz zwischen dem Elastizitätsmodul bei 250 °C und dem bei 150 °C wird verringert. D. h. die Vulkanisate werden mit zunehmender Temperatur, wie sie im Pannenfall auftritt, kaum weicher. Es wird somit im Pannenfall das Fahren über eine längere Strecke und/oder mit höherer Geschwindigkeit ermöglicht.

Durch die zusätzliche Vernetzung mit Schwefel in Anwesenheit von Beschleunigern, wie es die Mischungen 3(E), 4(E) und 5(E) zeigen, lässt sich die Vulkanisationszeit stark verkürzen, was aus verfahrensökonomischen Gründen wünschenswert ist.

Außderdem wurden Reifen der Dimension 245/45 R17 gebaut, die im Querschnitt mondsichelförmige Verstärkungsprofile im Seitenwandbereich einer Dicke von 9,6 mm aufwiesen, wobei die Verstärkungsprofile aus den Mischungen der folgenden Tabelle 3 gebildet wurden. Die Vulkanisateigenschaften wurden gemäß den oben aufgelisten Testverfahren (Prüfkörpervulkanisation: 160 °C, 20 min) bestimmt. Auch die Ermüdungsbeständigkeit der Vulkanisate wurde mit einem Fatigue to Failure-Tester (FTF) nach Monsanto (Zyklen bis zur Zerstörung der Probe) bestimmt. Mit den Reifen wurde das Notlaufverhalten im Pannenfall untersucht, wobei sowohl die noch fahrbare Kilometerleistung ohne Luft bei einer Geschwindigkeit von 80 km/h auf einer Versuchstrommel als auch auf der Straße ermittelt wurde. Die Fahrleistung des Reifens mit der Mischung 7(V) als Verstärkungsprofil wurde dabei gleich 100 % gesetzt. Außerdem wurde das Komfortverhalten der Reifen im üblichen Fahrbetrieb (mit vorgeschriebenem Luftdruck) über subjektive Beurteilung bewertet. Die Ergebnisse der Vulkanisateeigenschaften und der Reifenversuche sind in Tabelle 4 dargestellt.

**Tabelle 3**

| **Bestandteile** | **Einheit** | **7(V)** | **8(E)** |
|---|---|---|---|
| Naturkautschuk | phr | 25 | 25 |
| BR^{a} | phr | 35 | 35 |
| syndiotaktisches BR | phr | 40 | 40 |
| Ruß N660 | phr | 60 | 60 |
| Weichmacheröl | phr | 6 | 6 |
| Klebharze | phr | 4 | 4 |
| Alterungsschutzmittel | phr | 3 | 3 |
| Zinkoxid | phr | 5 | 5 |
| Stearinsäure | phr | 1 | 1 |
| TBzTD^{b} | phr | 0,8 | 0 |
| ZBEC | phr | - | 2,6 |
| CBS | phr | 2,3 | 0,1 |
| Schwefel 66,7 % in naphthenischem Öl | phr | 9 | 0,3 |
| bifunktioneller Vernetzer^{c} | phr | - | 8,7 |

| | | | |
|---|---|---|---|
| ^{a} High-cis Polybutadien vom Nd-Typ ^{b} Tetrabenzylthiuramdisulfid ^{c} Addukt aus Nitrosophenol und Methylen-bis-(4-phenylisocyanat), NOVOR^{®} 950, Akrochem Corporation, USA | | | |

**Tabelle 4**

| **Eigenschaft** | **Einheit** | **7(V)** | **8(E)** |
|---|---|---|---|
| t₉₀ bei 160°C | min | 3,49 | 23,42 |
| t_{R99} bei 160 °C | min | 8,34 | - |
| Härte bei RT | Shore A | 76,0 | 71,9 |
| Härte bei 70 °C | Shore A | 76,4 | 71,1 |
| Rüpra. bei RT | % | 68,3 | 62,8 |
| Rüpra. bei 70 °C | % | 74,6 | 65,4 |
| Zugfestigkeit bei RT | MPa | 10,9 | 10,0 |
| Reißdehnung bei RT | % | 136 | 182 |
| Spannungswert 50 % | MPa | 3,48 | 2,41 |
| Spannungswert 100 % | MPa | 8,2 | 5,1 |
| E' mean (50-70 °C) | MPa | 12,5 | 11,8 |
| E' mean (100-250 °C) | MPa | 11,1 | 10,6 |
| E'(250°C)-E'(150°C) | MPa | -3,6 | -1,3 |
| FTF Monsanto | Zyklen | 26300 | 220400 |

| **Reifeneigenschaften** | | | |
|---|---|---|---|
| Notlaufdistanz auf Trommel | % | 100 | 130 |
| Notlaufdistanz auf Straße | % | 100 | 200 |
| Komfort | % | 100 | 110 |

Die Tabelle 4 belegt, dass Reifen mit Verstärkungsprofilen aus Mischungen, die einen bifunktionellen Vernetzer, der zur Bildung von Urethanbrücken fähig ist, enthalten, die Pannenlauffähigkeit der Reifen sehr deutlich verbessern. Gleichzeitig verbleibt der Komfort auf hohem Niveau oder wird sogar noch verbessert. Auch die Ermüdungsbeständigkeit der Vulkanisate ist deutlich verbessert, was zu einer erhöhten Pannenlauffähigkeit beiträgt.

## Patentansprüche

1. Fahrzeugluftreifen in radialer Bauart mit einem profilierten Laufstreifen (1), einem mehrlagigen Gürtelverband (2), einer Innenschicht (4), einer zumindest einlagig ausgeführten Karkasse (3), welche um Wulstkerne (6) und Wulstprofile (7) in Wulstbereichen (5) gerührt ist, Seitenwänden (8) und mit zumindest je einem im Bereich jeder Seitenwand (8) eingebrachten, im Querschnitt mondsichelförmigen Verstärkungsprofil (9), welches sich jeweils zumindest über einen Großteil der Seitenwandlänge erstreckt und aus zumindest einer vulkanisierten Kautschukmischung gebildet ist,
**dadurch gekennzeichnet, dass** die Kautschukmischung des im Querschnitt mondsichelförmigen Verstärkungsprofils (9) mit Hilfe zumindest eines bifunktionellen Vernetzers unter Bildung von Urethan- oder Harnstoffbrücken vulkanisiert ist.

2. Fahrzeugluftreifen nach Anspruch 1, **dadurch gekennzeichnet, dass** zumindest einer der bifunktionellen Vernetzer ein Nitrosophenol/Diisocyanat-Addukt ist.

3. Fahrzeugluftreifen nach Anspruch 2, **dadurch gekennzeichnet, dass** zumindest einer der bifunktionellen Vernetzer ein Addukt aus Nitrosophenol und Methylen-bis-(4-phenylisocyanat) ist.

4. Fahrzeugluftreifen nach zumindest einem der vorhergehenden Ansprüche, **dadurch gekennzeichnet, dass** die Kautschukmischung des im Querschnitt mondsichelförmigen Verstärkungsprofils (9) mit Hilfe von 2 bis 12 phr, vorzugsweise von 3 bis 9 phr, des bifunktionellen Vernetzers vulkanisiert ist.

5. Fahrzeugluftreifen nach zumindest einem der vorhergehenden Ansprüche, **dadurch gekennzeichnet, dass** die Kautschukmischung des im Querschnitt mondsichelförmigen Verstärkungsprofils (9) zusätzlich und gleichzeitig mit Schwefel und zumindest einem Vulkanisationsbeschleuniger vulkanisiert ist.

6. Fahrzeugluftreifen nach Anspruch 6, **dadurch gekennzeichnet, dass** Schwefel in Mengen von 0,2 bis 6 phr eingesetzt wird.

7. Fahrzeugluftreifen nach Anspruch 6 oder 7, **dadurch gekennzeichnet, dass** als Vulkanisationsbeschleuniger Zink-dibenzyldithiocarbamat (ZBEC) eingesetzt wird.

8. Fahrzeugluftreifen nach zumindest einem der vorhergehenden Ansprüche, **dadurch gekennzeichnet, dass** die Kautschukmischung des im Querschnitt mondsichelförmigen Verstärkungsprofils (9) als Kautschuk Naturkautschuk und/oder Polybutadien enthält.

9. Fahrzeugluftreifen nach zumindest einem der vorhergehenden Ansprüche, **dadurch gekennzeichnet, dass** die Kautschukmischung des im Querschnitt mondsichelförmigen Verstärkungsprofils (9) 40 bis 90 phr, vorzugsweise 50 bis 70 phr, hysteresearmen Ruß mit einer Jodadsorptionszahl von weniger als 100 g/kg enthält.

10. Fahrzeugluftreifen nach zumindest einem der vorhergehenden Ansprüche, **dadurch gekennzeichnet, dass** die Wulstprofile (7) auf derselben Kautschukmischung basieren wie das im Querschnitt mondsichelförmige Verstärkungsprofil (9).

## Claims

1. Pneumatic vehicle tyre of a radial type of construction, comprising a profiled tread rubber (1), a multi-ply breaker belt assembly (2), an inner layer (4), a carcass (3) of at least a single-ply configuration, which is led around bead cores (6) and bead profiles (7) in bead regions (5), sidewalls (8) and at least one cross-sectionally crescent-shaped reinforcing profile (9), which is respectively incorporated in the region of each sidewall (8), in each case extends at least over a large part of the length of the sidewall and is formed from at least one vulcanized rubber mix, **characterized in that** the rubber mix of the cross-sectionally crescent-shaped reinforcing profile (9) is vulcanised with the aid of at least one bifunctional crosslinking agent while forming urethane or urea bridges.

2. Pneumatic vehicle tyre according to Claim 1, **characterized in that** at least one of the bifunctional crosslinking agents is a nitrosophenol/diisocyanate adduct.

3. Pneumatic vehicle tyre according to Claim 2, **characterized in that** at least one of the bifunctional crosslinking agents is an adduct of nitrosophenol and methylene-bis-(4-phenylisocyanate).

4. Pneumatic vehicle tyre according to at least one of the preceding claims, **characterized in that** the rubber mix of the cross-sectionally crescent-shaped reinforcing profile (9) is vulcanized with the aid of 2 to 12 phr, preferably 3 to 9 phr, of the bifunctional crosslinking agent.

5. Pneumatic tyre according to at least one of the preceding claims, **characterized in that** the rubber mix of the cross-sectionally crescent-shaped reinforcing profile (9) is vulcanized additionally and at the same time with sulphur and at least one vulcanization accelerator.

6. Pneumatic vehicle tyre according to Claim 6, **characterized in that** sulphur is used in quantities of 0.2 to 6 phr.

7. Pneumatic vehicle tyre according to Claim 5 or 6, **characterized in that** zinc dibenzyldithiocarbamate (ZBEC) is used as the vulcanization accelerator.

8. Pneumatic vehicle tyre according to at least one of the preceding claims, **characterized in that** the rubber mix of the cross-sectionally crescent-shaped reinforcing profile (9) contains natural rubber and/or polybutadiene as the rubber.

9. Pneumatic vehicle tyre according to at least one of the preceding claims, **characterized in that** the rubber mix of the cross-sectionally crescent-shaped reinforcing profile (9) contains 40 to 90 phr, preferably 50 to 70 phr, of low-hysteresis carbon black with an iodine absorption number of less than 100 g/kg.

10. Pneumatic vehicle tyre according to at least one of the preceding claims, **characterized in that** the bead profiles (7) are based on the same rubber mix as the cross-sectionally crescent-shaped reinforcing profile (9).

## Revendications

1. Pneumatique de véhicule en version radiale avec une bande de roulement profilée (1), une membrure de carcasse radiale multicouches (2), une couche intérieure (4), une carcasse (3) réalisée au moins en monocouche, qui est guidée autour de tringles de talon (6) et de profilés de talon (7) dans des zones de talon (5), des parois latérales (8) et avec au moins chaque fois un profilé de renfort (9) intégré dans la zone de chaque paroi latérale (8), à section transversale en forme de croissant de lune, qui s'étend chaque fois au moins sur une grande partie de la longueur de la paroi latérale et qui est formé d'au moins un mélange de caoutchoucs vulcanisé,
**caractérisé en ce que** le mélange de caoutchoucs du profilé de renfort (9) à section transversale en forme de croissant de lune est vulcanisé à l'aide d'au moins un agent réticulant bifonctionnel, sous formation de ponts d'uréthane ou d'urée.

2. Pneumatique de véhicule selon la revendication 1, **caractérisé en ce qu'**au moins l'un des agents réticulants bifonctionnels est un produit d'addition nitrosophénol/di-isocyanate.

3. Pneumatique de véhicule selon la revendication 2, **caractérisé en ce qu'**au moins l'un des agents réticulants bifonctionnels est un produit d'addition de nitrosophénol et de méthylène-bis-(4-phénylisocyanate).

4. Pneumatique de véhicule selon au moins l'une quelconque des revendications précédentes, **caractérisé en ce que** le mélange de caoutchoucs du profilé de renfort (9) à section transversale en forme de croissant de lune est vulcanisé à l'aide de 2 à 12 phr, de préférence de 3 à 9 phr de l'agent réticulant bifonctionnel.

5. Pneumatique de véhicule selon au moins l'une quelconque des revendications précédentes, **caractérisé en ce que** le mélange de caoutchoucs du profilé de renfort (9) à section transversale en forme de croissant de lune est vulcanisé en supplément et simultanément avec du soufre et au moins un accélérateur de vulcanisation.

6. Pneumatique de véhicule selon la revendication 6, **caractérisé en ce qu'**on met en oeuvre du soufre dans des quantités de 0,2 à 6 phr.

7. Pneumatique de véhicule selon la revendication 5 u 6 **caractérisé en ce qu'**en tant qu'accélérateur de vulcanisation, on met en oeuvre du dibenzyldithiocarbamate de zinc (ZBEC).

8. Pneumatique de véhicule selon au moins l'une quelconque des revendications précédentes, **caractérisé en ce que** le mélange de caoutchoucs du profilé de renfort (9) à section transversale en forme de croissant de lune contient en tant que caoutchoucs du caoutchouc naturel et/ou du polybutadiène.

9. Pneumatique de véhicule selon au moins l'une quelconque des revendications précédentes, **caractérisé en ce que** le mélange de caoutchoucs du profilé de renfort (9) à section transversale en forme de croissant de lune contient de 40 à 90 phr, de préférence de 50 à 70 phr de noir de carbone à faible hysteresis, avec un indice d'adsorption d'iode inférieur à 100 g/kg.

10. Pneumatique de véhicule selon au moins l'une quelconque des revendications précédentes, **caractérisé en ce que** les profilés de talon (7) sont basés sur le même mélange de caoutchoucs que le profilé de renfort (9) à section transversale en forme de croissant de lune.
